(19) Europäisches Patentamt
European Patent Office
Office européen des brevets

(11) **EP 4 144 511 A1**

(12) **EUROPEAN PATENT APPLICATION**

(43) Date of publication:
**08.03.2023 Bulletin 2023/10**

(21) Application number: **21194602.5**

(22) Date of filing: **02.09.2021**

(51) International Patent Classification (IPC):
**B29C 70/50** $^{(2006.01)}$   **B29B 15/12** $^{(2006.01)}$
**B05D 7/20** $^{(2006.01)}$   **C08J 5/24** $^{(2006.01)}$
**B29K 75/00** $^{(2006.01)}$

(52) Cooperative Patent Classification (CPC):
**B29B 15/125; B29C 70/504; C08J 5/244;**
B29K 2075/00; B32B 2375/00; C08J 2375/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not
yet been filed**

(74) Representative: **Levpat**
**c/o Covestro AG**
**Gebäude K12**
**51365 Leverkusen (DE)**

(54) **METHOD FOR PREPARING A POLYURETHANE COMPOSITE**

(57)   The invention relates to a method and a device for preparing a polyurethane composite, the polyurethane composite prepared by the method, and the use thereof.

Fig. 1

**Description**

**Technical Field**

The invention belongs to the field of double-crawler molding process for polyurethanes. Specifically, the present invention relates to a method and a device for preparing a polyurethane composite by a double-crawler molding process for polyurethanes, the polyurethane composite prepared by the method and the use thereof.

**Prior art**

The traditional heating double-crawler process mainly uses an open infiltrating method, that is, the fibers or fabrics or felts pass through an infiltration bath with a pressure roller/rod or a rubbing rod, and the fibers with resin are gradually extruded by a pre-forming plate and then enter the heated double-crawler machine, and then are cured. The traditional open infiltrating process has a series of problems such as the relatively high resin waste rate and meanwhile the resin accumulation in the infiltration bath, and the shutdown caused by the gelation of the accumulated resin over time.

CN109562581A discloses a system for pultruding a beam, such as a pultruded beam of natural fibers, comprising a pulling mechanism continuously pulling on a preform of yarns including a thermoplastic matrix and fibers, the pulling mechanism being downstream of the system.

CN107116812A discloses a fiber infiltration system, comprising an injection box provided with a cavity with an injection cavity for fibers to pass through, an injection hole for injecting resin, and a resin channel for connecting the injection cavity and the injection hole, and wherein the cavity further comprises a compression section located upstream of the injection cavity, the depth of the inlet of the compression section is greater than or equal to the depth of the outlet thereof, and the depths of the inlet and of the outlet of the compression section are 0-2mm.

CN102179943A discloses an injection mold for an injection pultrusion process and a method for preparing a resin-based composite by using the injection mold, and relates to an injection mold and a method for preparing a resin-based composite by using the injection mold.

Despite the above disclosures, there is still an urgent need for an improved process and a corresponding device in the industry to save raw materials and meet the requirements for energy saving, emission reduction and environmental friendliness.

**Summary of the invention**

One aspect of the present invention is to provide a method for preparing a polyurethane composite, comprising:

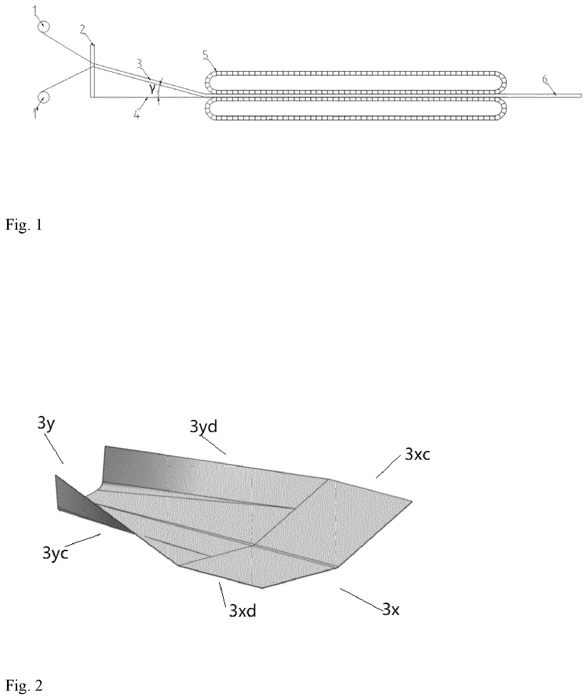

infiltrating at least a fibrous reinforcing material (1, 1') with a polyurethane composition in an infiltration bath (3); passing the at least a fibrous reinforcing material (1, 1'), which is infiltrated, continuously through a double-crawler molding machine (5), and then curing to obtain the polyurethane composite; wherein the infiltration bath (3) is inclined relative to the horizontal plane, and preferably, the inclination angle is of 1-25 degrees, preferably 2-22 degrees, more preferably 3-18 degrees. As shown in Figure 1, the inclination angle is marked as $\gamma$.

Preferably, the infiltration bath (3) comprises an inlet (3a) and an outlet (3b), and the inlet (3a) and the outlet (3b) have both cross-sections, and the ratio of the cross-sectional area of the inlet (3a) to that of the outlet (3b) is $\geq 1$, preferably $\geq 3$, more preferably 4-18.

Preferably, the infiltration bath (3) comprises an infiltration section (3x) and a preforming section (3y), wherein the infiltration bath (3) has a variable cross-sectional shape and gradually narrows from the infiltration section (3x) to the preforming section (3y).

Preferably, the infiltration section (3x) has two side walls (3xc, 3xd). The two side walls (3xc, 3xd) have angles $\alpha 1$ and $\alpha 2$ relative to the horizontal plane, respectively. $\alpha 1$ and $\alpha 2$ are respectively selected from 10-90 degrees, preferably 30-90 degrees, more preferably 40-90 degrees. That is, $\alpha 1$ is selected from 10-90 degrees, preferably 30-90 degrees, and more preferably 40-90 degrees. $\alpha 2$ is selected from 10-90 degrees, preferably 30-90 degrees, more preferably 40-90 degrees. Preferably, $\alpha 1$ and $\alpha 2$ have the same degrees.

Preferably, the preforming section (3y) has two side walls (3yc, 3yd). The two side walls (3yc, 3yd) have angles $\beta 1$ and $\beta 2$ relative to the horizontal plane, respectively. $\beta 1$ and $\beta 2$ are respectively selected from 30-90 degrees, preferably 45-90 degrees, more preferably 50-90 degrees. That is, $\beta 1$ is selected from 30-90 degrees, preferably 45-90 degrees, and more preferably 50-90 degrees; and $\beta 2$ is selected from 30-90 degrees, preferably 45-90 degrees, and more preferably 50-90 degrees. Preferably, $\beta 1$ and $\beta 2$ have the same degrees.

Preferably, the ratio of the angles ($\alpha 1 + \alpha 2$) to the angles ($\beta 1 + \beta 2$), ($\alpha 1 + \alpha 2$): ($\beta 1 + \beta 2$) is <1, preferably $\leq 0.8$, more preferably $\leq 0.6$. Preferably, $\alpha 1 = \alpha 2$, $\beta 1 = \beta 2$, and $\alpha 1 : \beta 1$ <1, preferably $\leq 0.8$, more preferably $\leq 0.6$. Given ($\alpha 1 + \alpha 2$)=$\alpha$ and

(β1+β2)=β, then α: β <1, preferably ≤0.8, more preferably ≤0.6.

Preferably, the amount of polyurethane composition required in the method with (α1+α2): (β1+β2) <1 is reduced by ≥1%, preferably ≥3%, more preferably ≥5%, compared with the method with (α1+ α2): (β1+β2) =1.

Preferably, the inlet (3a) of the infiltration bath (3) has a cross section. The shape of the cross section is selected from square, semi-circular, trapezoidal, fan-shaped, polygonal, V-shaped, elliptical, or a combination thereof.

Preferably, the amount of the polyurethane composition required in the method, in which the infiltration bath (3) is inclined relative to the horizontal plane, is reduced by ≥1%, preferably ≥3%, more preferably ≥5%, compared with the method, in which the infiltration bath (3) is parallel to the horizontal plane. The infiltration bath (3) is parallel to the horizontal plane, which means that the infiltration bath (3) as a whole is parallel to the horizontal plane.

Preferably, the polyurethane composition comprises:

component A comprising polyisocyanate;
component B comprising a polyether polyol with a functionality of 2.0-8.0, preferably 2.0-5.0, and a hydroxyl number of 50-550 mgKOH/g, preferably 90-450 mgKOH/g (tested according to ISO 14900-2017); and
component C, at least one blowing agent.

Preferably, the gel time of the polyurethane composition at 25°C is 3-16 minutes, preferably 5-12 minutes, and more preferably 6-10 minutes.

Preferably, the curing time of the polyurethane composition at 55°C is 25-60 minutes, preferably 25-50 minutes, and more preferably 30-45 minutes.

Preferably, the free foam density of the polyurethane composite is 160-500 kg/m$^3$, preferably 165-480 kg/m$^3$, and more preferably 165-470 kg/m$^3$.

Another aspect of the present invention is to provide a polyurethane composite prepared by the aforementioned method for preparing a polyurethane composite according to the present invention.

Preferably, the density of the polyurethane composite is 400-1400 kg/m$^3$, preferably 450-1300 kg/m$^3$, and more preferably 500-1250 kg/m$^3$.

Preferably, the content of the fibrous reinforcing material in the polyurethane composite is 30-85% by weight, preferably 35-85% by weight, and more preferably 40-85% by weight, based on the total weight of the polyurethane composite.

Yet another aspect of the present invention is to provide a device used in the method for preparing a polyurethane composite of the present invention, comprising:

at least an infiltration bath (3) and a double-crawler molding machine (5), wherein the infiltration bath (3) is inclined relative to the horizontal plane, and preferably, the inclination angle is of 1-25 degrees, preferably 2-22 degrees, more preferably 3-18 degrees.

Preferably, the infiltration bath (3) comprises an inlet (3a) and an outlet (3b), and the inlet (3a) and the outlet (3b) have both cross-sections, and the ratio of the cross-sectional area of the inlet (3a) to that of the outlet (3b) is ≥1, preferably ≥3, more preferably 4-18.

Preferably, the infiltration bath (3) comprises an infiltration section (3x) and a preforming section (3y), and the infiltration bath (3) has a variable cross-sectional shape and gradually narrows from the infiltration section (3x) to the preforming section (3y).

Preferably, the infiltration section (3x) has two side walls (3xc, 3xd), and the two side walls (3xc, 3xd) have angles α1 and α2 relative to the horizontal plane, respectively, and α1 and α2 are respectively selected from 10-90 degrees, preferably 30-90 degrees, more preferably 40-90 degrees. That is, α1 is selected from 10-90 degrees, preferably 30-90 degrees, and more preferably 40-90 degrees. α2 is selected from 10-90 degrees, preferably 30-90 degrees, more preferably 40-90 degrees. Preferably, α1 and α2 have the same degrees.

Preferably, the preforming section (3y) has two side walls (3yc, 3yd), and the two side walls (3yc, 3yd) have angles β1 and β2 relative to the horizontal plane, respectively, and β1 and β2 are respectively selected from 30-90 degrees, preferably 45-90 degrees, more preferably 50-90 degrees. That is, β1 is selected from 30-90 degrees, preferably 45-90 degrees, more preferably 50-90; and β2 is selected from 30-90 degrees, preferably 45-90 degrees, more preferably 50-90 degrees. Preferably, β1 and β2 have the same degrees.

Preferably, the ratio of the angles (α1+α2) to the angles (β1+β2), (α1+α2): (β1+β2) is <1, preferably ≤0.8, more preferably ≤0.6. Preferably, α1=α2, β1=β2, and α1: β1 <1, preferably ≤0.8, more preferably ≤0.6.

Preferably, the amount of polyurethane composition required in the method with (α1+α2): (β1+β2) <1 is reduced by ≥1%, preferably ≥3%, more preferably ≥5%, compared with the method with (α1+ α2): (β1+β2) =1.

Preferably, the length of the infiltration bath (3) is of 20-400 cm, preferably 30-300 cm, more preferably 40-200 cm, particularly preferably 50-150 cm.

Preferably, along the direction in which the fibrous reinforcing material moves, a yarn guide plate (2) is installed in front of the infiltration bath (3). Preferably, a preforming plate is installed behind the infiltration bath (3).

Another aspect of the present invention is to provide a polyurethane product, comprising the polyurethane composite aforementioned according to the present invention, characterized in that the polyurethane product is selected from cable trays, curtain wall frames for doors and windows, ladder frames, tent poles or tubes, antiglare panels, floors, pumping oil poles, telegraph poles and cross-arms, guardrails, grilles, construction profiles, container profiles and plates, bicycle frames, fishing poles, cable cores, insulator core rods, antenna radomes, single layer or sandwich continuous plates, sheets for producing main beams of turbine blades, composite sleepers, composite bridge frames, railings, walls, buildings, bridges and bridge frames.

By repeated experiments, it is found unexpectedly that the method for preparing a polyurethane composite of the present invention having features, such as comprises an inclined infiltration bath, and a corresponding double-crawler molding machine and the like, can infiltrate the fibrous reinforcing material better while avoiding the overflow and waste of the polyurethane composition, thereby improving the production efficiency greatly, and also saving energy and raw materials, and being more environmentally friendly. In particular, as the polyurethane composition will not overflow, it is not necessary for frequent shutdowns for cleaning and maintenance, thereby greatly saving manpower, material resources and related costs. Moreover, good infiltration allows the fiber content in the composite to be increased. The technical solution of the present invention makes related industries of more commercial value, thereby promoting their faster and better development.

In particular, the preferred method and device of the present invention for preparing a polyurethane composite comprising an infiltration bath with a specific structure can further ensure the uniform and sufficient infiltration, and can also prevent the polyurethane composition from leaking and accumulating, thereby greatly saving the amount of raw materials. Moreover, as there is basically no leakage and accumulation, it is not necessary for time-consuming and labor-intensive frequent cleaning and maintenance of the device, which further improves the device utilization and the production efficiency.

Embodiments

The embodiments of the present invention are described below.

The method for preparing a polyurethane composite of the present invention comprises: infiltrating at least a fibrous reinforcing material (1, 1') with a polyurethane composition in an infiltration bath (3);

passing the at least an infiltrated fibrous reinforcing material (1, 1'), which is infiltrated, continuously through a double-crawler molding machine (5), and then curing to obtain the polyurethane composite;

wherein the infiltration bath (3) is inclined relative to the horizontal plane, and preferably, the inclination angle is of 1-25 degrees, preferably 2-22 degrees, more preferably 3-18 degrees.

Preferably, the infiltration bath (3) is inclined relative to the horizontal plane, which means that the infiltration bath (3) as a whole is inclined relative to the horizontal plane, and the bottom surface and both sides of the infiltration bath are inclined relative to the horizontal plane. As shown in Figure 1, the angle $\gamma$ between 3 and 4 is the angle at which the infiltration bath is inclined relative to the horizontal plane. In other words, the inclination angle $\gamma$ is the angle formed between the Infiltration bath and the horizontal plane, and is also the angle formed between the infiltration bath and the horizontal plane in a direction opposite to the direction in which the fibers move.

Preferably, the infiltration bath (3) comprises an inlet (3a) and an outlet (3b), and the inlet (3a) and the outlet (3b) have both cross-sections, and the ratio of the cross-sectional area of the inlet (3a) to that of the outlet (3b) is $\geq 1$, preferably $\geq 3$, more preferably 4-18. Specifically, given that the cross-sectional area of the inlet (3a) is 3aS and that of the outlet (3b) is 3bS, then 3aS: 3bS is $\geq 1$, preferably $\geq 3$, more preferably 4-18.

Preferably, the infiltration bath (3) comprises an infiltration section (3x) and a preforming section (3y), wherein the infiltration bath (3) has a variable cross-sectional shape and gradually narrows from the infiltration section (3x) to the preforming section (3y). Specifically, given that the inlet of the infiltration section (3x) has a cross section 3xi with an area of 3xiA and the outlet of the preforming section (3y) has a cross section 3yi with an area of 3yiA, then the area from the inlet of the infiltration section to the outlet of the preforming section (3xiA to 3yiA) is gradually reduced.

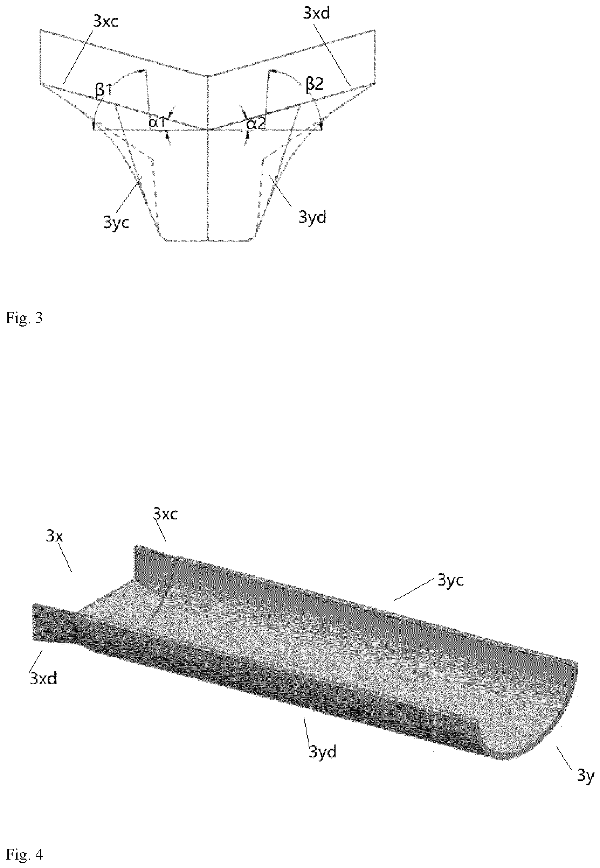

Preferably, the infiltration section (3x) has two side walls (3xc, 3xd), and the two side walls (3xc, 3xd) have angles $\alpha 1$ and $\alpha 2$ relative to the horizontal plane, respectively, and $\alpha 1$ and $\alpha 2$ are respectively selected from 10-90 degrees, preferably 30-90 degrees, more preferably 40-90 degrees. That is, $\alpha 1$ is selected from 10-90 degrees, preferably 30-90 degrees, and more preferably 40-90 degrees. $\alpha 2$ is selected from 10-90 degrees, preferably 30-90 degrees, more preferably 40-90 degrees. Preferably, $\alpha 1$ and $\alpha 2$ have the same degrees. Specifically, the $\alpha 1$ and $\alpha 2$ are the angles formed by the two side walls of the infiltration section relative to the horizontal plane, respetively. As shown in Figure 3, $\alpha 1$ is the angle formed between 3xc and the horizontal plane, and $\alpha 2$ is the angle formed between 3xd and the horizontal plane.

Preferably, the preforming section (3y) has two side walls (3yc, 3yd), and the two side walls (3yc, 3yd) have angles $\beta 1$ and $\beta 2$ relative to the horizontal plane, respectively, and $\beta 1$ and $\beta 2$ are respectively selected from 30-90 degrees, preferably 45-90 degrees, more preferably 50-90 degrees, and preferably, $\beta 1$ and $\beta 2$ have the same degrees.

The $\beta 1$ and $\beta 2$ are the angles formed by the two side walls of the infiltration section relative to the horizontal plane. As shown in Figure 3, $\beta 1$ is the angle formed between 3yc and the horizontal plane, and $\beta 2$ is the angle formed between 3yd and the horizontal plane.

Preferably, the ratio of the angles $(\alpha 1+\alpha 2)$ to the angles $(\beta 1+\beta 2)$, $(\alpha 1+\alpha 2):(\beta 1+\beta 2)$ is <1, preferably $\leq 0.8$, more preferably $\leq 0.6$. Preferably, $\alpha 1=\alpha 2$, $\beta 1=\beta 2$, and $\alpha 1: \beta 1$ <1, preferably $\leq 0.8$, more preferably $\leq 0.6$.

Preferably, the amount of polyurethane composition required in the method with $(\alpha 1+\alpha 2):(\beta 1+\beta 2)$<1 is reduced by $\geq 1\%$, preferably $\geq 3\%$, more preferably $\geq 5\%$, compared with the method with $(\alpha 1+\alpha 2):(\beta 1+\beta 2)$ =1. That is, given that the amount of polyurethane composition consumed in the method for preparing a polyurethane composite with $(\alpha 1+\alpha 2):(\beta 1+\beta 2)$ =1 is n gram (g), and the amount of polyurethane composition consumed in the method for preparing a polyurethane composite with $(\alpha 1+\alpha 2):(\beta 1+\beta 2)$ <1 is m gram (g), then (n-m)/n*% is the reduction in the amount of polyurethane composition required in the method with $(\alpha 1+\alpha 2):(\beta 1+\beta 2)$ <1.

Preferably, the inlet (3a) of the infiltration bath (3) has a cross section. The shape of the cross section is selected from square, semi-circular, trapezoidal, fan-shaped, polygonal, V-shaped, or elliptical.

Preferably, the amount of the polyurethane composition required in the method, in which the infiltration bath (3) is inclined relative to the horizontal plane, is reduced by $\geq 1\%$, preferably $\geq 3\%$, more preferably $\geq 5\%$, compared with the method, in which the infiltration bath (3) is parallel to the horizontal plane. That is, given that the amount of polyurethane composition consumed in the method for preparing a polyurethane composite, in which the infiltration bath (3) as a whole is parallel to the horizontal plane, is i gram (g), and the amount of polyurethane composition consumed in the method for preparing a polyurethane composite, in which the infiltration bath (3) is inclined relative to the horizontal plane, is j gram (g), then (i-j)/i*% is the reduction in the amount of polyurethane composition required in the method, in which the infiltration bath (3) is inclined relative to the horizontal plane.

Preferably, the infiltration bath (3) further comprises at least one auxiliary infiltration roller, preferably two infiltration rollers.

Where used in the present invention, there is no requirement on the shape and size of the fibrous reinforcing material. For example, it may be a continuous fiber, a fiber web formed by bonding, or a fiber fabric.

The fibrous reinforcing material of the present invention refers to a material which is preferably selected from glass fibers, carbon fibers, polyester fibers, natural fibers, aramid fibers, nylon fibers, basalt fibers, boron fibers, silicon carbide fibers, asbestos fibers, whiskers, metal fibers or a combination thereof.

Preferably, the polyurethane composition comprises:

component A comprising polyisocyanate;
component B comprising a polyether polyol with a functionality of 2.0-8.0, preferably 2-6, more preferably 2-5, and a hydroxyl number of 50-550 mgKOH/g, preferably 90-450 mgKOH/g (tested according to ISO 14900-2017); and
component C, at least one blowing agent.

Optionally, the polyisocyanate may be any aliphatic, alicyclic or aromatic isocyanates known to be used for preparing polyurethanes. Examples include, but are not limited to, toluene diisocyanate (TDI), diphenylmethane diisocyanate (MDI), polyphenylene polymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethylxylylene diisocyanate (TMXDI) and their polymers, or a combination thereof. The functionality of the isocyanate usable in the present invention is preferably 2.0-3.5, particularly preferably 2.1-2.9. The viscosity of the isocyanate is preferably 5-700 mPa·s, particularly preferably 10-300 mPa·s, measured at 25°C according to DIN 53019-1-3.

Preferably, the polyisocyanate of the present invention includes dimers, trimers, tetramers, pentamers of the isocyanates, or a combination thereof.

In a preferred embodiment of the present invention, the isocyanate component A is selected from diphenylmethane diisocyanate (MDI), polyphenylene polymethylene polyisocyanate (pMDI), and their polymers, prepolymers or a combination thereof. A blocked isocyanate may also be used as the isocyanate of component A, which may be prepared by reacting an excess of organic polyisocyanates or a mixture thereof with a polyol compound. These compounds and their preparation methods are well known to those skilled in the art.

Preferably, the polyether polyol can be prepared by a known process, for example, by reacting an olefin oxide with a starter in the presence of a catalyst. The catalyst is preferably, but not limited to, alkaline hydroxide, alkaline alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preference ethylene oxide and/or propylene oxide. The starter is preferably, but not limited to, a polyhydroxy compound or a polyamino compound. The polyhydroxy compound is preferably, but not limited to, water, ethylene glycol, 1,2-propanediol, 1,3-propanediol, and diethylene glycol, trimethylolpropane, glycerin, bisphenol A, bisphenol S or a mixture thereof. The polyamino compound is preferably, but not limited to, ethylene diamine, propylene diamine, butane diamine, hexamethylene diamine, diethylene triamine, toluene diamine or a mixture thereof.

A polyether carbonate polyol can also be used in the present invention, which can be prepared by adding carbon dioxide and alkylene oxide on a starter material containing active hydrogen in the presence of a double metal cyanide catalyst.

The polyester polyol can be prepared by reacting a dicarboxylic acid or a dicarboxylic acid anhydride with a polyol. The dicarboxylic acid is preferably, but not limited to, aliphatic carboxylic acids containing 2-12 carbon atoms, which are preferably, but not limited to, succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a mixture thereof. The dicarboxylic acid anhydride is preferably, but not limited to, phthalic anhydride, tetrachlorophthalic anhydride, maleic anhydride, or a mixture thereof. The polyol reacted with the dicarboxylic acid or the dicarboxylic acid anhydride is preferably, but not limited to, ethylene glycol, diethylene glycol, 1,2-propanediol, 1,3-propanediol, dipropylene glycol, 1,3-methyl propylene glycol, 1,4-butanediol, 1,5-pentanediol, 1,6-hexanediol, neopentyl glycol, 1,10-decanediol, glycerol, trimethylolpropane, or a mixture thereof. The polyester polyol also includes that prepared from lactones. The polyester polyol prepared from lactones is preferably, but not limited to, ε-caprolactone. Preferably, the molecular weight of the polyester polyol is of 200-3000, and the functionality is of 2-6, preferably 2-5, and more preferably 2-4.

Those skilled in the art are familiar with the method for measuring the hydroxyl number, for example, as disclosed in Houben Weyl, Methoden der Organischen Chemie, vol. XIV/2 Makromolekulare Stoffe, p. 17, Georg Thieme Verlag; Stuttgart 1963. The entire content of this document is incorporated herein by reference.

When used in the present invention, the functionality and the hydroxyl number of the organic polyols refer to the average functionality and the average hydroxyl number, unless otherwise specified.

Optionally, the polyurethane composition of the present invention further comprises at least one catalyst. The catalyst is preferably, but not limited to, tertiary amine catalysts, alkali metal catalysts, and organotin compounds, such as N,N-dimethylcyclohexylamine, triethylenediamine, triethylamine, pentamethyldiethylenetriamine, tris(dimethylaminopropyl)hexahydrotriazine, bis(dimethylaminoethyl)ether, potassium acetate, potassium isooctanoate, potassium oleate, tin(II) acetate, tin(II) octoate, tin ethylhexanoate, tin laurate, dibutyl tin oxide, dibutyl tin dichloride, dibutyl tin diacetate, dibutyl tin maleate, dioctyl tin diacetate, or a mixture thereof. Preferably, the amount of the catalyst is 0.001-3.0% by weight, based on 100% by weight of the total weight of the polyurethane composition of the present invention.

The blowing agent that may be used in the present invention includes physical blowing agents and chemical blowing agents. Those commonly used are low-boiling alkanes and fluorocarbons, such as pentane, cyclopentane, n-pentane, n-hexane, petroleum ether, hydrofluorocarbons, vinyl hydrochlorofluorocarbons, etc. The chemical blowing agents may be preferably water.

By repeated experiments, it is found unexpectedly that the method for preparing a polyurethane composite of the present invention having features, such as an inclined infiltration bath, especially an inclined infiltration bath with a specific shape, and a corresponding double-crawler molding machine and the like, can simply and efficiently prepare polyurethane composites with excellent quality and good curing, and also avoid resin accumulation and the resulting shutdown, and additionally effectively save raw materials of the polyurethane composition.

By the method for preparing a polyurethane composite of the present invention, polyurethane composites with satisfactory quality and low density can be prepared simply and efficiently. Thus, it saves raw material and costs, improves production efficiency, and promotes of the development of related industries.

Unless defined otherwise, all technical and scientific terms used herein have the same meaning as commonly understood by those skilled in the art. When the definition of a term in this specification conflicts with the meanings commonly understood by those skilled in the art, the definition described herein shall apply.

The present invention is illustrated by the following examples. But it should be understood that the scope of the present invention is not limited by these examples.

**Description of drawings**

The present invention will be exemplarily illustrated below with reference to the drawings:

Figure 1 shows a schematic diagram of the mold and the technical process (using a hollow tube made in-line) shown in the method for preparing a polyurethane composite by a double-crawler molding process according to a preferred example of the present invention, wherein the parts or materials represented by numbers are as follows: 1, 1' - fibers, 2 - yarn guide plate, 3 - infiltration bath, 4 - support platform, 5 - double-crawler molding machine, 6 - product, wherein γ represents the angle of the infiltration bath (3) relative to the horizontal plane.

Figure 2 is a three-dimensional view of the infiltration bath in a preferred example of the present invention, wherein 3x represents the infiltration section, 3y represents the preforming section, 3xc and 3xd represent the two side walls of the infiltration section respectively, and 3yc and 3yd represent the two side walls of the preforming section respectively.

Figure 3 is a perspective view of the infiltration bath in a preferred example of the present invention, wherein 3x represents the infiltration section, 3y represents the preforming section, 3xc and 3xd represent the two side walls of the infiltration section respectively, and 3yc and 3yd represent the two side walls of the preforming section respectively, $\alpha1$ and $\alpha2$ represent the angle of the two side walls of the infiltration section relative to the horizontal plane respectively, and $\beta1$ and $\beta2$ represent the angle of the two side walls of the preforming section relative to the horizontal plane respectively.

Figure 4 is a three-dimensional view of the infiltration bath in a preferred example of the present invention, wherein 3x represents the infiltration section, 3y represents the preforming section, 3xc and 3xd represent the two side walls of the infiltration section respectively, and 3yc and 3yd represent the two side walls of the preforming section respectively.

## Examples

Description of the tests for performance parameters in the examples of the present application: Functionality refers to the value measured according to the industry formula: functionality = hydroxyl number * molecular weight / 56100; wherein the molecular weight is determined by GPC (high performance liquid chromatography);

The isocyanate index refers to the value calculated by the following formula:

$$\text{Isocyanate index\%} = \frac{\text{Moles of isocyanate groups (NCO groups) in component A}}{\text{Moles of isocyanate reactive groups in component B}} \times 100\%$$

NCO content refers to the content of NCO groups in the system, measured according to GB/T 12009.4-2016.

## Source and description of raw materials

Table 1- List of raw materials

| Raw material/equipment name | Specification/type | Supplier |
|---|---|---|
| Isocyanate | Desmodur 1511L | Covestro Polymers (China) Co., Ltd. |
| Polyol component | Baydur 48BD176 | Covestro Polymers (China) Co., Ltd. |
| Glass fiber | PS4100-9600Tex | Owens Corning Composites (China) Co., Ltd. |
| Double-crawler molding machine | Production line for synthetic sleepers with a length of 30 meters | Xiamen Guanyu Equipment Manufacturing Co., Ltd. |
| Injection machine | H-type high pressure foaming machine | Shanghai Xinhao Electromechanical Technology Co., Ltd. |

Examples 1:

Taking the production of a polyurethane composite with a cross-sectional size of 100 mm * 100 mm as an example, an infiltration bath with $\alpha1{:}\beta1{<}1$ shown in Figure 2 was used. As shown in Figure 1, the infiltration bath (3) was firstly installed on the support platform (4), wherein the infiltration bath (3) had an angle of $\gamma{=}10$ degrees relative to the horizontal plane, the infiltration section (3x) of the infiltration bath (3) had an angle of $\alpha1{=}\alpha2{=}45$ degrees relative to the horizontal plane, and the molding section (3y) of the infiltration bath (3) had an angle of $\beta1{=}\beta2{=}80$ degrees relative to the horizontal plane. Thereafter, 406 bundles of glass fiber yarns 1 were drawn out from the creel, and passed through the yarn guide plate (2), the infiltration bath (3) and the double-crawler molding machine (5) in sequence. The heating device of the double-crawler molding machine (5) was turned on, and the temperature was set at 55°C. Upon the temperature being stable, the injection machine was started, and the polyurethane composition/resin component A (Desmodur 1511L) and component B (Baydur 48BD176) at a weight ratio of 100:130 were continuously pumped to a mixing head, and injected into the infiltration bath (3) after being mixed with the mixing head. Two sets of auxiliary infiltration rollers in the infiltration bath (3) were started to knead the fibers left and right, so that the fibers were fully infiltrated. The fiber yarns infiltrated in the infiltration bath (3) passed continuously through the double-crawler molding machine at a speed of 0.8 m/min. After leaving the double-crawler molding machine, the product had a uniform surface, and was well cured, and the end surface after cutting was well infiltrated. After 24 hours of continuous production, there was no resin accumulation at the outlet of the infiltration bath, and the production was stable. The total amount of polyurethane composition consumed to produce the polyurethane composite of 100 m * 100 mm * 100 mm was recorded as 260 kilograms (kg).

Examples 2:

The device and the procedure were the same as in example 1, except that the angle formed by the infiltration section (3x) of the infiltration bath (3) relative to the horizontal plane was $\alpha1=\alpha2=35$ degrees, and the angle formed by the preforming section (3y) of the infiltration bath (3) relative to the horizontal plane was $\beta1=\beta2=35$ degrees.
The fiber yarns infiltrated in the infiltration bath (3) passed continuously through the double-crawler molding machine at a speed of 0.8 m/min. After leaving the double-crawler molding machine, the product had a uniform surface, and was well cured, and the end surface after cutting was well infiltrated. After 24 hours of continuous production, there was no resin accumulation at the outlet of the bath, but there was a slight resin accumulation at the inlet of the mold, and the production was basically stable. The total amount of polyurethane composition consumed to produce the polyurethane composite of 100 m * 100 mm * 100 mm was recorded as 273 kilograms (kg).

Comparative Example 1:

The procedure was the same as in Example 2, except that the infiltration bath (3) was parallel to the horizontal plane. After leaving the double-crawler molding machine, the product had a uniform surface, and was well cured, and the end surface after cutting was well infiltrated. After 24 hours of continuous production, there was serious resin accumulation at the outlet of the infiltration bath, which needed to be cleaned. In addition, there was a slight resin accumulation at the inlet of the mold. The total amount of polyurethane composition consumed to produce the polyurethane composite of 100 m * 100 mm * 100 mm was recorded as 298 kilograms (kg).
It can be seen from the experimental results of Examples 1 and 2 and Comparative Example 1 as above that, by the method for preparing a polyurethane composite of the present invention, polyurethane composites with good infiltration and high quality can be prepared simply and efficiently, and resin leakage and waste can be avoided, so that raw materials and resources can be saved, which is more environmentally friendly.
Although the present invention has been described in detail above for the purpose of the present invention, it should be understood that this detailed description is only exemplary. In addition to the contents that are defined by the claims, those skilled in the art can make various changes without departing from the spirit and scope of the present invention.

**Claims**

1. A method for preparing a polyurethane composite, comprising

   infiltrating at least a fibrous reinforcing material (1, 1') with a polyurethane composition in an infiltration bath (3); passing the at least a fibrous reinforcing material (1, 1'), which is infiltrated, continuously through a double-crawler molding machine (5), and then curing to obtain the polyurethane composite; wherein the infiltration bath (3) is inclined relative to the horizontal plane, and preferably, the inclination angle is of 1-25 degrees, preferably 2-22 degrees, more preferably 3-18 degrees.

2. The method according to claim 1, **characterized in that** the infiltration bath (3) comprises an infiltration section (3x) and a preforming section (3y), and the infiltration bath (3) has a variable cross-sectional shape and gradually narrows from the infiltration section (3x) to the preforming section (3y).

3. The method according to claim 2, **characterized in that** the infiltration section (3x) has two side walls (3xc, 3xd), and the two side walls (3xc, 3xd) have angles $\alpha1$ and $\alpha2$ relative to the horizontal plane, respectively, and $\alpha1$ and $\alpha2$ are respectively selected from 10-90 degrees, preferably 30-90 degrees, more preferably 40-90 degrees, and preferably, $\alpha1$ and $\alpha2$ have the same degrees.

4. The method according to claim 3, **characterized in that** the preforming section (3y) has two side walls (3yc, 3yd), and the two side walls (3yc, 3yd) have angles $\beta1$ and $\beta2$ relative to the horizontal plane, respectively, and $\beta1$ and $\beta2$ are respectively selected from 30-90 degrees, preferably 45-90 degrees, more preferably 50-90 degrees, and

preferably, $\beta1$ and $\beta2$ have the same degrees.

5. The method according to claim 4, **characterized in that** the ratio of the angles $(\alpha1+\alpha2)$ to the angles $(\beta1+\beta2)$, $(\alpha1+\alpha2)$: $(\beta1+\beta2)$ is smaller than 1, $(\alpha1+\alpha2)$: $(\beta1+\beta2)$ is <1, preferably ≤0.8, more preferably ≤0.6.

6. The method according to claim 5, **characterized in that** the amount of polyurethane composition required in the method with $(\alpha1+\alpha2)$: $(\beta1+\beta2)$ <1 is reduced by ≥1%, preferably ≥3%, more preferably ≥5%, compared with the method with $(\alpha1+\alpha2)$: $(\beta1+\beta2)$ = 1.

7. The method according to any one of claims 1-6, **characterized in that** the amount of the polyurethane composition required in the method, in which the infiltration bath (3) is inclined relative to the horizontal plane, is reduced by ≥1%, preferably ≥3%, more preferably ≥5%, compared with the method, in which the infiltration bath (3) is parallel to the horizontal plane.

8. A polyurethane composite prepared by the method for preparing a polyurethane composite according to any one of claims 1-7.

9. A device used in the method for preparing a polyurethane composite according to any one of claims 1-7, comprising: at least an infiltration bath (3) and a double-crawler molding machine (5), wherein the infiltration bath (3) is inclined relative to the horizontal plane, and preferably, the inclination angle is of 1-25 degrees, preferably 2-22 degrees, more preferably 3-18 degrees.

10. The device according to claim 9, **characterized in that** the infiltration bath (3) comprises an infiltration section (3x) and a preforming section (3y), wherein the infiltration bath (3) has a variable cross-sectional shape and gradually narrows from the infiltration section (3x) to the preforming section (3y).

11. The device according to claim 9 or 10, **characterized in that** the infiltration section (3x) has two side walls (3xc, 3xd), and the planes, on which the two side walls (3xc, 3xd) are located, have angles $\alpha1$ and $\alpha2$ relative to the horizontal plane, respectively, and $\alpha1$ and $\alpha2$ are respectively selected from 10-90 degrees, preferably 30-90 degrees, more preferably 40-90 degrees, and preferably, $\alpha1$ and $\alpha2$ have the same degrees.

12. The device according to claim 11, **characterized in that** the preforming section (3y) has two side walls (3yc, 3yd), and the planes, on which the two side walls (3yc, 3yd) are located, have angles $\beta1$ and $\beta2$ relative to the horizontal plane, respectively, and $\beta1$ and $\beta2$ are respectively selected from 30-90 degrees, preferably 45-90 degrees, more preferably 50-90 degrees, and preferably, $\beta1$ and $\beta2$ have the same degrees.

13. The device according to claim 12, **characterized in that** the ratio of the angles $(\alpha1+\alpha2)$ to the angles $(\beta1+\beta2)$, $(\alpha1+\alpha2)$: $(\beta1+\beta2)$ is <1, preferably ≤0.8, more preferably ≤0.6.

14. The device according to any one of claims 9-13, **characterized in that** the infiltration bath (3) comprises an inlet (3a) and an outlet (3b), and the inlet (3a) and the outlet (3b) have both cross-sections, and the ratio of the cross-sectional area of the inlet (3a) to that of the outlet (3b) is ≥1, preferably ≥3, more preferably 4-18.

15. A polyurethane product, comprising the polyurethane composite according to claim 8, **characterized in that** the polyurethane product is selected from cable trays, curtain wall frames for doors and windows, ladder frames, tent poles or tubes, antiglare panels, floors, pumping oil poles, telegraph poles and cross-arms, guardrails, grilles, construction profiles, container profiles and plates, bicycle frames, fishing poles, cable cores, insulator core rods, antenna radomes, single layer or sandwich continuous plates, sheets for producing main beams of turbine blades, composite sleepers, composite bridge frames, railings, walls, buildings, bridges and bridge frames.

Fig. 1

Fig. 2

Fig. 3

Fig. 4

## EUROPEAN SEARCH REPORT

Application Number

EP 21 19 4602

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 384 063 A (EDISON POLYMER INNO) 29 August 1990 (1990-08-29) * abstract; figures 1,2,3 * * column 4, line 12 - line 20 * * column 7, line 10 - line 24 * * column 7, line 41 - column 8, line 21 * * column 10, line 28 - line 44 * * claims 2,11 * * column 5, line 8 - line 37 * | 1-7,9-15 | INV. B29C70/50 B29B15/12 B05D7/20 C08J5/24 ADD. B29K75/00 |
| X | EP 0 513 927 A1 (SHELL INT RESEARCH [NL]) 19 November 1992 (1992-11-19) * abstract; figures 1,2,3,4,7,8 * * column 3, line 53 - column 4, line 27 * * column 3, line 34 - line 52 * * column 1, line 54 - column 2, line 10 * | 1-7,9-15 | |
| X | US 2018/001516 A1 (BERLIN MARK REINHARD [DE] ET AL) 4 January 2018 (2018-01-04) * abstract; figures 1,2,3 * * paragraph [0035] - paragraph [0039] * | 1,2,8-10 | |
| A | CH 599 270 A5 (MUELLER MONTANA RESEARCH & CO) 31 May 1978 (1978-05-31) * figures 1,2 * * column 3, line 13 - line 40 * | 1-15 | TECHNICAL FIELDS SEARCHED (IPC) B29C B29B B32B C23D B05D |
| A | EP 2 314 642 A1 (TORAY INDUSTRIES [JP]) 27 April 2011 (2011-04-27) * paragraph [0051] * * paragraph [0084] * * paragraph [0238] * | 1-15 | B29K C08J |

The present search report has been drawn up for all claims

| Place of search | Date of completion of the search | Examiner |
|---|---|---|
| The Hague | 16 February 2022 | Barunovic, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 4602

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2022

| Patent document cited in search report | | Publication date | Patent family member(s) | | Publication date |
|---|---|---|---|---|---|
| EP 0384063 | A | 29-08-1990 | CA | 1336483 C | 01-08-1995 |
| | | | EP | 0384063 A2 | 29-08-1990 |
| | | | JP | H02229021 A | 11-09-1990 |
| | | | US | 5294461 A | 15-03-1994 |
| EP 0513927 | A1 | 19-11-1992 | AT | 131113 T | 15-12-1995 |
| | | | AU | 653400 B2 | 29-09-1994 |
| | | | CA | 2068691 A1 | 17-11-1992 |
| | | | DE | 69206479 T2 | 15-05-1996 |
| | | | EP | 0513927 A1 | 19-11-1992 |
| | | | ES | 2080428 T3 | 01-02-1996 |
| | | | JP | H05156507 A | 22-06-1993 |
| | | | KR | 920021282 A | 18-12-1992 |
| US 2018001516 | A1 | 04-01-2018 | BR | 112017014212 A2 | 10-04-2018 |
| | | | CA | 2972135 A1 | 07-07-2016 |
| | | | CN | 107249838 A | 13-10-2017 |
| | | | EP | 3240662 A1 | 08-11-2017 |
| | | | JP | 6703541 B2 | 03-06-2020 |
| | | | JP | 2018501376 A | 18-01-2018 |
| | | | KR | 20170100016 A | 01-09-2017 |
| | | | US | 2018001516 A1 | 04-01-2018 |
| | | | WO | 2016107808 A1 | 07-07-2016 |
| CH 599270 | A5 | 31-05-1978 | NONE | | |
| EP 2314642 | A1 | 27-04-2011 | CA | 2731283 A1 | 04-02-2010 |
| | | | CN | 102056971 A | 11-05-2011 |
| | | | CN | 103524769 A | 22-01-2014 |
| | | | EP | 2314642 A1 | 27-04-2011 |
| | | | EP | 2803694 A2 | 19-11-2014 |
| | | | ES | 2524476 T3 | 09-12-2014 |
| | | | ES | 2755105 T3 | 21-04-2020 |
| | | | KR | 20110055482 A | 25-05-2011 |
| | | | KR | 20120034240 A | 10-04-2012 |
| | | | PT | 2803694 T | 31-10-2019 |
| | | | TW | 201008988 A | 01-03-2010 |
| | | | TW | 201239017 A | 01-10-2012 |
| | | | US | 2011143110 A1 | 16-06-2011 |
| | | | US | 2012012263 A1 | 19-01-2012 |
| | | | WO | 2010013645 A1 | 04-02-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109562581 A
- CN 107116812 A

- CN 102179943 A

**Non-patent literature cited in the description**

- Methoden der Organischen Chemie. **HOUBEN WEYL.** Makromolekulare Stoffe. Georg Thieme Verlag, 1963, vol. XIV/2, 17